(19)

Europäisches
Patentamt
European
Patent Office
Office européen
des brevets

(11) **EP 2 026 201 A1**

(12) **EUROPEAN PATENT APPLICATION**

(43) Date of publication:
**18.02.2009 Bulletin 2009/08**

(51) Int Cl.:
*G06F 9/32* (2006.01)    *G06F 9/30* (2006.01)

(21) Application number: **07075672.1**

(22) Date of filing: **10.08.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Cortus S.A.**
**34960 Montpellier Cedex 2 (FR)**

(72) Inventor: **Chapman, Michael Colin George**
**34970 Lattes (FR)**

(54) **Processor branch instruction encoding**

(57)    A microprocessor typically has instructions which branch to an address relative to the program counter or relative to the address of the branch instruction. This involves adding an offset encoded in the instruction to the value contained in the program counter or to the address of the branch instruction. This allows most of the desirable branch destinations within a function to be covered by a short offset (often 8 bits) in the instruction.

This address calculation is in the critical path for the implementation of very high clock rate processor implementations.

The method and apparatus presented here encodes the branch differently avoiding the use of an adder for generating the address while keeping the advantage of being to branch anywhere within a reasonable range of the location of the branch instruction. Two bits are taken from the offset in the branch instruction and are used to select one of three possible page registers to which the remaining bits are concatenated.

FIGURE 3

**Description**

*FIELD OF THE INVENTION*

This invention relates to the instruction encoding used in a microprocessor. In particular it relates to the encoding method of branch instructions and conditional branch instructions. These branch instructions have typically been encoded using a signed offset from either the address of the branch instruction or the address of the following instruction (often called program counter). This invention uses a different method for the branch encoding and a new apparatus for generating the target address which does not require the use of an adder.

*BACKGROUND OF THE INVENTION*

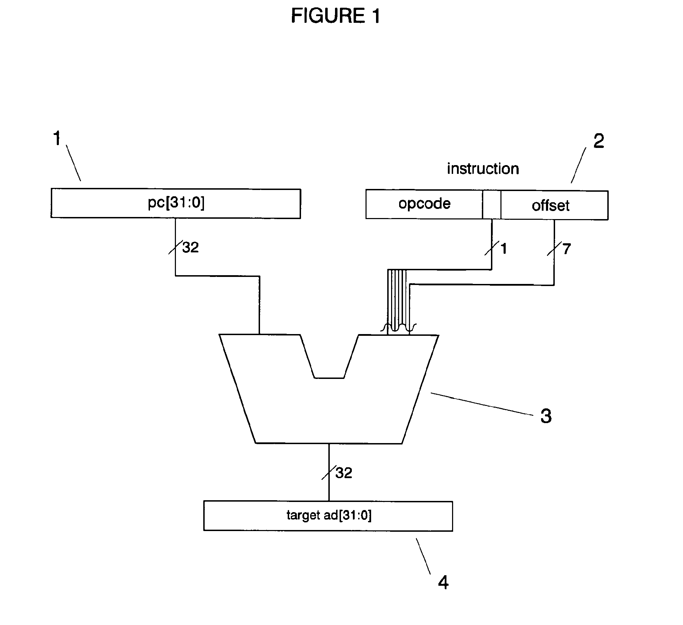

Branch instructions within a program function usually branch to a destination which is within that function. Since most functions are quite short, a small signed offset (usually 8 to 16 bits) added to the current program address (either the address of the branch instruction itself, or the address of the following instruction) is sufficient to cover a large fraction of the useful destinations. However this method does require an adder in the instruction fetch path. In a very high speed processor implementation this adder ends up being in the critical path. This apparatus is in shown in figure 1. The instruction contains an opcode identifying the instruction and a signed offset (2). In this apparatus the signed offset is 8 bits in length as is quite common. The offset (2) is extended to the same length as the program counter by replicating the sign bit. This is then added to the program counter or PC (1) using the adder (3). The result of the addition is the target address (4). In this particular apparatus and in the following implementations we assume that instructions can be any number of bytes in length.

Of course in the case where instructions are always a whole number of words, the offset will be scaled by the number of bytes in a word and the low bit or bits of the program counter and target address are hard wired to 0.

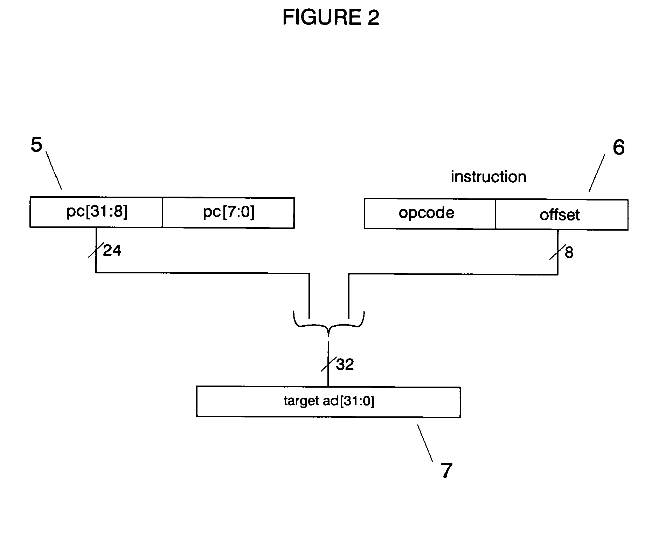

In the past to avoid this adder (3 in figure 1), the branch instructions have been encoded by using a value which was simply concatenated to the higher bits of the program counter. Such a scheme was used in the PDP8 small computer manufactured by Digital Equipment Corporation. In figure 2 we show this implementation with an 8 bit address offset (6). The 24 most significant bits of the program counter or PC (5) are concatenated with the 8 bit offset (6) value to form a 32 bit target address (7).

As a consequence only those target destinations which are on the same 256 byte page are reachable. What is on the same page and what is not on the same page is determined by where the start of the function is loaded into memory. That is, if the function was loaded such that the branch instruction itself ends up at an address which is a multiple of 256, then it can only jump forwards. If it was loaded one location before, it could only jump backwards. In modem computer and software systems these limitations are unacceptable.

*OBJECT OF THE INVENTION*

The object of the invention is to maintain the advantage of the common signed offset branch implementation. That is to maintain the ability to branch anywhere within a reasonable range of the current address regardless as to what the current address might be, while avoiding the use of an adder in the critical instruction fetch path.

*DESCRIPTION OF THE INVENTION*

In this invention the branch destination is given by the concatenation of the bits encoded in the branch instruction to one of three values (the three page values). Which one of these three values is to be used for the remainder of the bits is also encoded into the instruction.

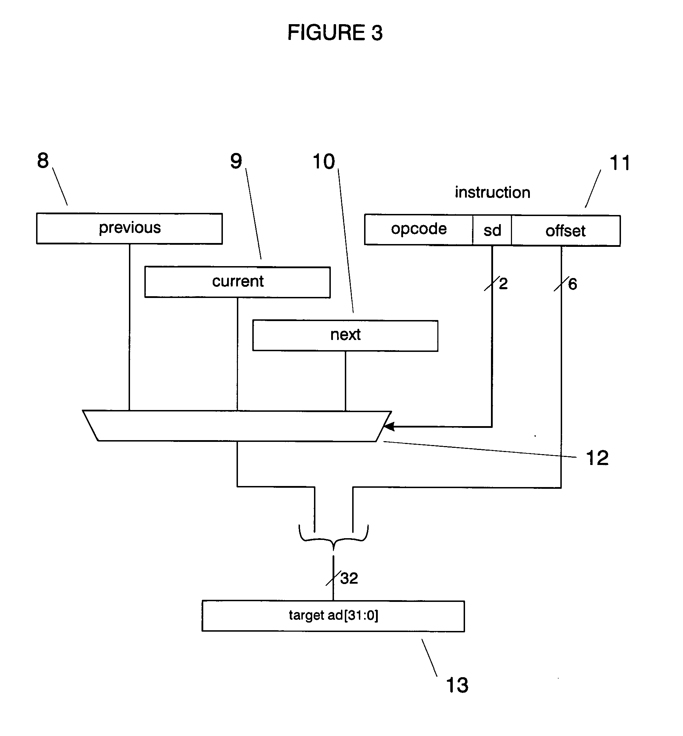

An apparatus implementing this scheme is shown in figure 3. In this specific apparatus we assume that 8 bits are reserved for encoding the branch destination as in the previous two figures. Of course an actual implementation may use different numbers of bits. The page address of an instruction is all but the lower 6 bits of the address. That is bits 31 down to 7 in this particular apparatus - a 32 bit machine using byte addressing for instructions. The three values which are maintained for this scheme are the page address of the current instruction (9) , the page address plus one of the current instruction - that is the next page address (10) and the page address minus one of the current instruction - the is the previous page address (8). From the 8 bit encoded branch destination field (11), two bits (sd) are reserved to select which of the page registers is to be used selected by the 3 to 1 multiplexer (12) and the remaining 6 bits are simply concatenated to form the target address (13).

The particular apparatus according to the invention presented here allows a branch to anywhere within +64/-64 bytes of the current location.

At link or load time the linker or loader can easily transform a traditional 7 bit signed offset in the object file or executable file into this scheme. The translated offset to be encoded by the linker or loader into the machine code instruction is given by:-

$$(PC + offset) \% 64 \qquad\qquad - eq\ 1$$

and the value of the page register selector field (sd) is given by:-

$$(PC + offset) / 64 - PC / 64 + 1 \qquad\qquad - eq\ 2$$

where the 0 selects the previous page register, 1 selects the current page register and 2 the next page register. Of course these three values may be trivially remapped to other values and different bit lengths for the PC, and offset fields may be used.

As is immediately apparent, the advantage of being able to branch anywhere within a reasonable range of the current instruction is preserved while avoiding the need to place an adder in the critical path. The disadvantage is that 1 bit less is available for the displacement. However, only three out of the four values possible for the page selector are used, so some of this disadvantage may be recovered by using three opcodes for each branch instruction instead of one.

Alternatively the remaining combination could be used to extend the branch range in one direction. This requires maintaining an additional page register which would be passed in to the multiplexer (12). For extending in the forward direction a page address + 2 would be maintained. This would allow branching anywhere within a range of -64 to +128 locations of the current instruction.

On all program transfer instructions, calculations are initiated to update the page registers. Depending on the degree of pipelining and issue rate, it may also be necessary to calculate the page address + 2 for the case that instruction fetch continues sequentially over the end of a page in order to have the page address + 1 ready for a forward branch. Providing the branch instructions are not too close to each other, the updated page address registers will be available in time for the next branch instruction.

The page address registers can be augmented with a valid bit which is cleared as soon as a branch is executed for which either the previous or next page was selected by the multiplexer (12). This bit is then set when the result of calculating the new page register is complete. This valid bit will be multiplexed along with the page value giving a valid bit for the entire target address. Note that only one page register value needs to be calculated. The other two can be reloaded from values already available in the page registers.

A similar method and apparatus can also be used to provide access to data local to the function although with modem compilers this is currently of less interest.

Those skilled in the art will recognize that modifications and variations can be made without departing from the spirit of the invention. In particular different numbers of bits can be used for each of the registers and quantities involved. Therefore, it is intended that this invention encompass all such variations and modifications as fall within the scope of the appended claims.

**Claims**

1. A microprocessor with branch instructions **characterised by** the instruction encoding which specifies one of three instruction page address registers to use and a field within the instruction which is concatenated to this page address forming the destination address, where the contents of the three page address registers are the page address of the current instruction, the page address plus one of the current instruction and the page address minus one of the current instruction.

2. A microprocessor with branch instructions according to claim 1 further **characterised by** that the linker/loader can transform relative branch instructions where the destination address is given by adding a signed offset encoded in the instruction to the address of the instruction itself, or to the address of the next instruction into the encoding in claim 1.

3. A microprocessor with branch instructions according to claim 1 further **characterised by** that the adder is not used to calculate a result which is used by the current branch instruction, but calculates a result which may be used by a future branch instruction by updating one the page registers - the other two page registers reusing the values already available in the page registers.

4.  A microprocessor according to claim 1 but **characterised by** the fact that the three page registers used contain the page address of the previous instruction, the page address minus one of the previous instruction and the page address plus one of the previous instruction.

5.  A microprocessor according to claims 1, 2, 3 and 4 where the addressing scheme is used for memory load and store instructions.

6.  A microprocessor according to claim 5, where the same addressing scheme is applied to instructions which reference memory.

# FIGURE 1

# FIGURE 2

# FIGURE 3

**European Patent Office**

# EUROPEAN SEARCH REPORT

Application Number

EP 07 07 5672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUNTHER B K: "A HIGH SPEED MECHANISM FOR SHORT BRANCHES" COMPUTER ARCHITECTURE NEWS, ACM, NEW YORK, NY, US, vol. 18, no. 4, 1 December 1990 (1990-12-01), pages 59-61, XP000201915 ISSN: 0163-5964 * page 59, right-hand column, paragraphs 3,4 * * page 61, left-hand column, paragraph 2 - right-hand column, paragraph 2 * ----- | 1-6 | INV. G06F9/32 G06F9/30 |
| A | JP 59 011451 A (NIPPON ELECTRIC CO) 21 January 1984 (1984-01-21) * abstract * ----- | 1-6 | |
| A | GB 1 341 447 A (INT STANDARD ELECTRIC CORP) 19 December 1973 (1973-12-19) ----- | | |
| | | | TECHNICAL FIELDS SEARCHED (IPC) |
| | | | G06F |

The present search report has been drawn up for all claims

| Place of search | Date of completion of the search | Examiner |
|---|---|---|
| The Hague | 13 November 2007 | DASKALAKIS, T |

EPO FORM 1503 03.82 (P04C01)

## ANNEX TO THE EUROPEAN SEARCH REPORT
## ON EUROPEAN PATENT APPLICATION NO.

EP 07 07 5672

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2007

| Patent document cited in search report | | Publication date | Patent family member(s) | | Publication date |
|---|---|---|---|---|---|
| JP 59011451 | A | 21-01-1984 | JP | 1496572 C | 16-05-1989 |
| | | | JP | 63001622 B | 13-01-1988 |
| GB 1341447 | A | 19-12-1973 | BE | 770225 A1 | 20-01-1972 |
| | | | DE | 2136483 A1 | 16-03-1972 |
| | | | ES | 393522 A1 | 16-08-1973 |
| | | | FR | 2098674 A5 | 10-03-1972 |
| | | | NL | 7110084 A | 25-01-1972 |

EPO FORM P0459

For more details about this annex : see Official Journal of the European Patent Office, No. 12/82